# EUROPEAN PATENT SPECIFICATION

(11) **EP 0 773 822 B1**
(45) Date of publication and mention of the grant of the patent: **06.10.1999**
(21) Application number: 95924922.8
(22) Date of filing: 23.06.1995
(51) Int. Cl.: B01D 29/01, B07B 1/46

(54) **SCREEN FOR SHALE SHAKER**
SIEBBODEN FÜR SCHIEFER SCHÜTTELVORRICHTUNG
CRIBLE POUR UN TAMIS VIBRANT

(30) Priority: 29.07.1994 US 282983
(43) Date of publication of application: 21.05.1997
(73) Proprietor: Tuboscope I/P Inc., Houston, TX 77051 (US)
(72) Inventor: LEONE, Vincent, Dominick, Sr., Houston, TX 77040 (US)
(74) Representative: Lucas, Brian Ronald
(86) International application number: PCT/EP95/02451
(87) International publication number: WO 96/04060

(56) References cited:
- DE-A- 2 513 101
- DE-A- 2 754 374
- FR-A- 2 380 080
- GB-A- 2 090 152
- GB-A- 2 206 501
- US-A- 5 417 858
- US-A- 5 417 859

## Description

This invention relates to a screen for use in a shale shaker and a shale shaker provided with such a screen.

During the drilling of oil and gas wells drilling fluid, which is typically a mixture of clay, water and various additives, is pumped through a hollow drill string and exits through holes in a drillbit. The drilling fluid picks up cuttings (rock chips) and other solids from the well and carries them upwardly away from the drill bit and out of the well in the space between the wall of the bore and the drill string. At the top of the well, the solids-laden drilling fluid is introduced into a shale shaker which is provided with a series of screens through which the drilling fluid passes whilst trapping the solids. The filtered drilling fluid is then reused.

Typically, shale shakers comprise a basket, the floor of which is formed by a plurality of screens which are either laid side by side at the same level or are arranged in a series of steps. The difficulty with existing arrangements is that solids can pass through the spaces between adjacent screens.

The aim of at least preferred embodiments of the present invention is to help reduce this problem.

GB-A-2 206 501 discloses screens which are provided with frames which are assembled end to end in abutting relationship, the frames being provided with interengaging tongues and grooves.

According to one aspect of the present invention there is provided a screen for use in a shale shaker which screen comprises a perforate filter material and is provided with means to enable said screen to be connected to an adjacent screen, wherein said means comprises at least one female member, characterised in that said at least one female member is formed by said perforate filter material to facilitate the passage of liquid therethrough.

Advantageously, said at least one female member is of rectangular, or triangular, or truncated triangular, or bell-shape cross-section.

Preferably, said means further comprises at least one male member.

If desired, said at least one male member may be formed by said perforate filter material although it could also be solid or hollow.

Preferably, said at least one male member is tapered.

Advantageously, said at least one male member is permanently secured to said screen although it could be removably mounted thereon. Permanent mounting may be effected by, for example welding, soldering, brazing or gluing.

In a particularly preferred embodiment said screen is rectangular, one side is provided with at least one male member and the opposite side is provided with at least one female member.

If desired, said male and female members may be arranged alternately.

Advantageously, said screen includes a frame on which set filter material is mounted and part of said means is formed by said frame. Thus a female member may be formed partially in said frame and partially by a female member formed by said filter material.

In another embodiment said screen includes a frame on which said filter material is mounted and part of said means is formed by said frame.

The present invention also provides a shale shaker provided with at least two screens according to the present invention connected together.

If desired said screens may be at substantially the same level. Alternatively, they may be at differing levels.

The present invention also provides a shale shaker provided with at least two screens according to the present invention connected together by a connector comprising a base, a first set of male members projecting from said base in a first direction, and a second set of male members projecting from said base in a second direction opposite said first direction.

If desired, said first set of male members may lie in a first plane and said second set of male members may lie in a second plane so that, in use, when adjacent screens are connected by said connector they lie in different planes.

For a better understanding of the present invention, reference will now be made, by way of example, to the accompanying drawings, in which:-
Fig. 1 is a perspective view, with part cut-away, of a shale shaker fitted with one embodiment of a screen in accordance with the present invention;
Fig. 2 is a partial perspective view of parts of two screens used in the shale shaker of Fig. 1;
Fig. 3 is a perspective view of parts of a second embodiment of a pair of screens in accordance with the present invention;
Fig. 4 is a perspective view of parts of a third embodiment of a pair of screens in accordance with the present invention;
Fig. 5 is a perspective view of parts of a fourth embodiment of a pair of screens in accordance with the present invention;
Fig. 6 is a perspective view of parts of a fifth embodiment of a pair of screens in accordance with the present invention;
Fig. 7 is a top view of part of a male screen connector according to the present invention;
Fig. 8 is a perspective view of part of the male screen connector shown in Fig. 7;
Fig. 9 is a perspective view of part of a seventh embodiment of a screen in accordance with the present invention;
Fig. 10 is a perspective view of part of an eighth embodiment of a screen in accordance with the present invention;
Fig. 11 is a perspective view of part of a ninth embodiment of a screen in accordance with the present invention;
Fig. 12 is a perspective view of part of a tenth embodiment of a screen in accordance with the present invention;
Fig. 13 is a perspective view of a female member which may form part of the screens shown in Figs. 1 to 9;
Fig. 14 is a perspective view of a female screen connector which may form the screen shown in Fig. 10;
Fig. 15 is a perspective, exploded view, of an eleventh embodiment of a pair of screens in accordance with the present invention; and
Fig. 16 is a side view of part of a twelfth embodiment of a pair of screens in accordance with the present invention.

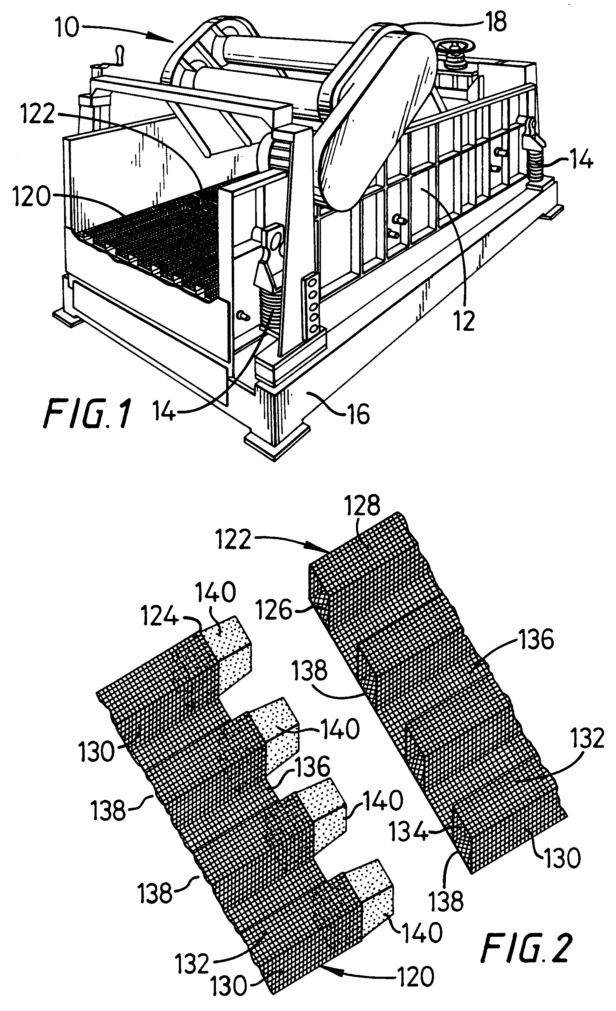

Referring to Figure 1, there is shown a shale shaker which is generally identified by reference numeral 10.

The shale shaker 10 comprises a basket 12 which is mounted on springs 14 which extend between the basket 12 and a frame 16. A vibrating apparatus 18 is mounted on the basket 12 and is arranged to vibrate the basket 12 in use.

A plurality of ribs (not visible in Fig. 1) extend transversely across and along the basket 12 and form a grid which supports a plurality of screens two of which i.e. screens 120 and 122 are visible in Fig. 1.

As shown in Figure 2, each of the screens 120, 122 comprises a punched plate 126 to which is bonded a layer of wire cloth 128. The wire cloth is bent so that in cross-section it has the appearance of a succession of square waves each having an upwardly extending portion 130, an upper horizontal portion 132, a downwardly extending portion 134, and a lower horizontal portion 136 bonded to the punched plate 126.

It will be appreciated that the screens 120, 122 thus comprise a plurality of channels 138 which extend therealong.

A plurality of male members 140 are permanently mounted in one end 124 of the channels 138 of the screen 120. Each male member 140 is of generally rectangular cross-section and is tapered towards the channels 138 in the screen 122 which form female members which snugly accommodate the male members 140 when the screens 120,122 are brought together.

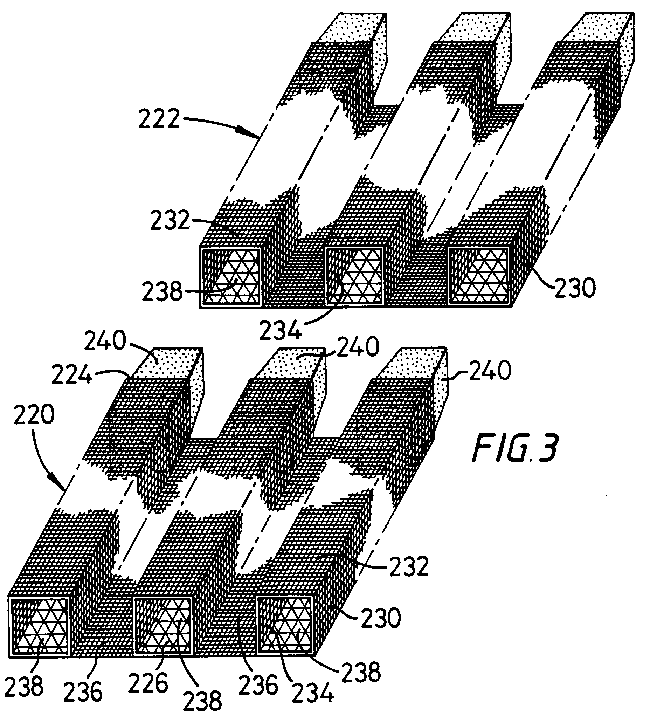

The embodiment shown in Figure 3 is generally similar to that shown in Figure 2 and parts having similar functions to parts in Figure 2 have been given similar reference numerals in the "200" series. The embodiment shown in Figure 3 differs from that shown in Figure 2 in that the channels 238 are reinforced by box sections 224 which extend the full length of the respective screens 220, 222. The box sections 242 are perforate. If desired the box sections 242 could be solid. Furthermore, rather than extend the entire length of the screens 220, 222 the box sections 242 could simply extend a short distance along the screens 220, 222.

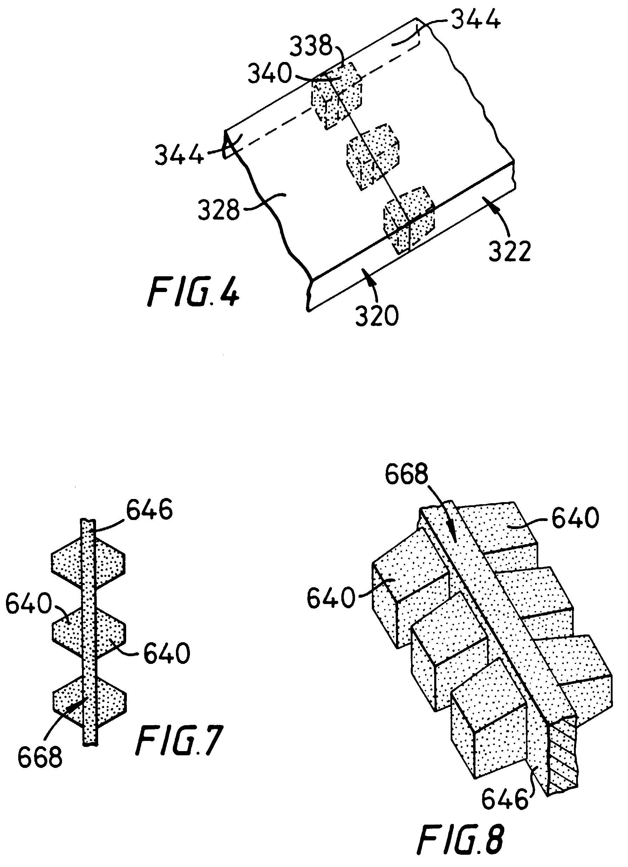

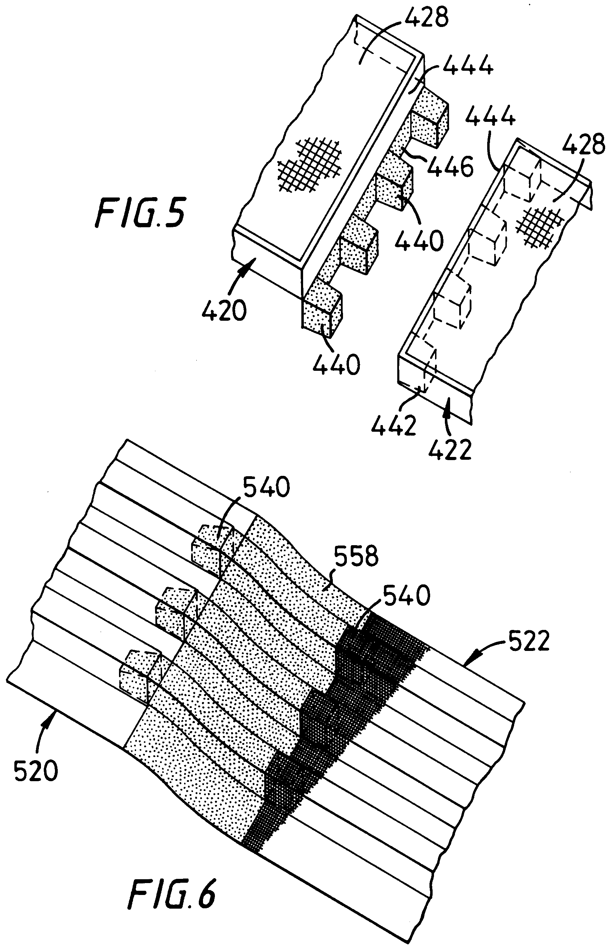

In the embodiment shown in Figure 4 the screens 320, 322 each comprise a frame 344 on which the wire cloth 328 is mounted. In this embodiment the male members 340 are formed as an integral part of the frame 344 and the female members which accommodate the male members 340 are formed by recesses 338 formed in the frame 344 of the screen 322.

The embodiment shown in Figure 5 is similar to that shown in Figure 4 except that the male members 440 are mounted on a base 446 which is disposed below and glued to the frame 444 of screen 420. Furthermore, the female members are formed both by rectangular holes in the frame 444 of the screen 422 and by box sections 442 which are secured to both the frame 444 of the screen 422 and to the wire cloth 428 thereon. It will be noted that the screens lie in different planes which are offset vertically from one another.

The embodiment shown in Figure 6 is similar to that shown in Figure 5 except that the adjacent ends of screens 520 and 522 are both provided with female members and are joined by a connector 558 each end of which is provided with male members 540. The connector 558 shown is solid and is made from plastics material. However, it could also be made of metal and could also be perforate if desired.

Figures 7 and 8 show a connector 668 which comprises a base 646. A plurality of male members 640 protrude outwardly from either side of the base 646 and, in use, extend into the female members of adjacent screens and maintain the screens in substantially the same plane.

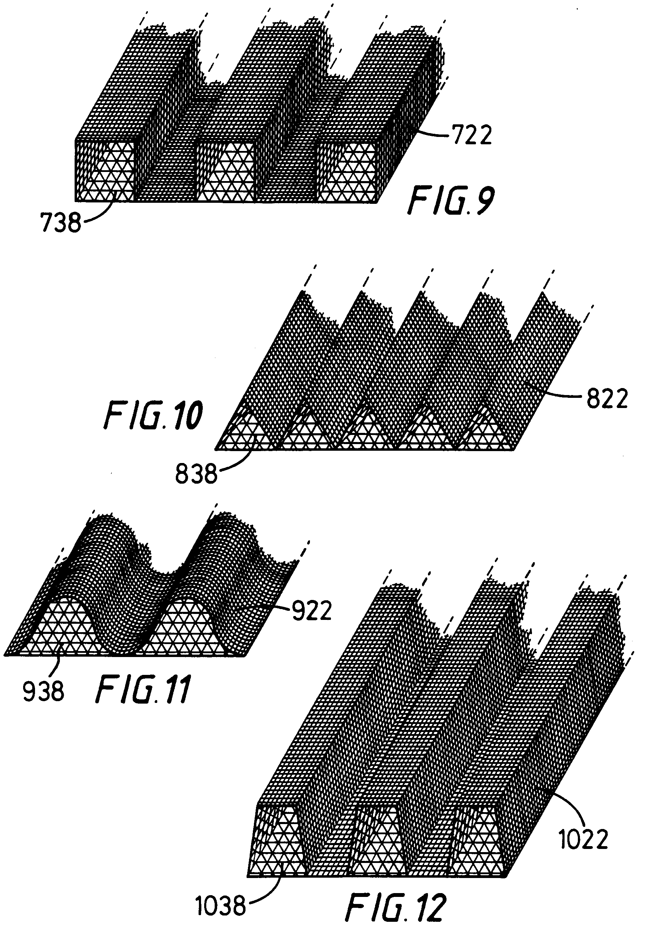

Figures 9 to 12 show screens with female members of different cross-sections.

The screen 722 shown in Fig. 9 has female members in the form of channels 738 at each end which are of square cross-section.

The screen 822 shown in Fig. 10 has female members in the form of channels 838 at each end which are of triangular cross-section.

The screen 922 shown in Fig. 11 has female members in the form of channels 938 at each end which are of bell shape cross-section.

The screen 1022 shown in Fig. 12 has female members in the form of channels 1038 at each end which are of truncated triangular cross-section.

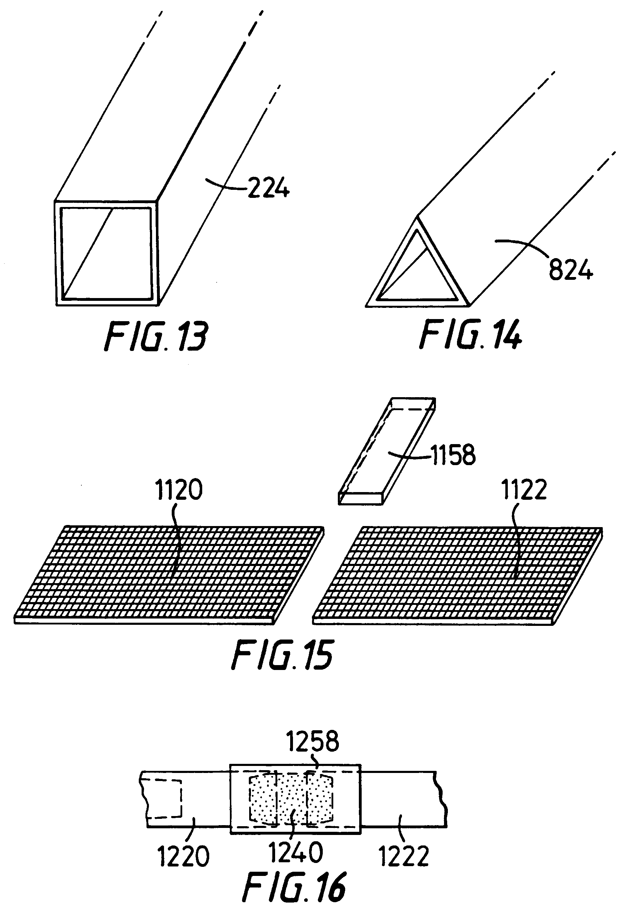

Figure 13 shows the box section 224 used in the embodiment shown in Figure 3 in greater detail. The box section 224 may be solid or perforate. It may be used to reinforce a female member or to act as a receptacle for holding a male member. It may be held within the wire cloth or may be attached thereto. It may also be attached to the frame of screens provided with frames or formed as an integral part thereof. As shown, the box section 224 is of square cross-section.

The section 824 shown in Fig. 14 is similar to box section 224 and can be used to reinforce the female members of the screen shown in Fig. 10.

In the embodiment shown in Figure 15 two adjacent screens 1120 and 1122 are maintained in juxtaposition with respect to one another by a connector 1158 which comprises a rectangular member which is open on each side to accommodate the screen 1120 and the screen 1122 respectively. Conveniently, the connector 1158 can be bonded to the screen 1122 to form a female member.

The embodiment shown in Figure 16 is generally similar to that shown in Figure 15 except that the screens 1220 and 1222 are each provided with female members which accommodate respective ends of a plurality of male members one of which 1240 is shown. The ends of the screens 1220 and 1222 also extend into a connector 1258.

## Claims

1. A screen for use in a shale shaker which screen comprises a perforate filter material and is provided with means to enable said screen to be connected to an adjacent screen, wherein said means comprises at least one female member (138) characterised in that said at least one female member (138) is formed by said perforate filter material to facilitate the passage of liquid therethrough.

2. A screen as claimed in Claim 1, wherein said at least one female member (738) is of rectangular cross-section.

3. A screen as claimed in Claim 1, wherein said at least one female member (838) is of triangular cross-section.

4. A screen as claimed in Claim 1, wherein said at least one female member (1038) is of truncated triangular cross-section.

5. A screen as claimed in Claim 1, wherein said at least one female member (938) is of bell-shape cross-section.

6. A screen as claimed in any preceding claim, characterised in that said means comprises at least one male member (240).

7. A screen as claimed in Claim 6, wherein said at least one male member is formed by said filter material.

8. A screen as claimed in Claim 6, wherein said at least one male member (240) is solid.

9. A screen as claimed in Claim 6, wherein said at least one male member is hollow.

10. A screen as claimed in Claim 6, 7, 8 or 9, wherein said at least one male member (140) is tapered.

11. A screen as claimed in any of Claims 6 to 10, wherein said at least one male member (140) is permanently secured to said screen.

12. A screen as claimed in any of Claims 6 to 11, characterised in that it is rectangular, one side is provided with at least one male member (240) and the opposite side is provided with at least one female member (238).

13. A screen as claimed in any of Claims 1 to 12, characterised by alternate male and female members.

14. A screen as claimed in any preceding claim, characterised in that said screen includes a frame on which said filter material is mounted and part of said means is formed by said frame.

15. A shale shaker (10) provided with at least two screens as claimed in any preceding claim connected together.

16. A shale shaker as claimed in Claim 15, characterised in that said screens are at substantially the same level.

17. A shale shaker as claimed in Claim 15, characterised in that said screens (420, 422) are at differing levels.

18. A shale shaker as claimed in Claim 15, further including a connector comprising a base (646), a first set of male members projecting from said base in a first direction, and a second set of male members projecting from said base in a second direction opposite said first direction.

19. A shale shaker as claimed in Claim 18, wherein said first set of male members of said connector lie in a first plane and said second set of male members lie in a second plane so that, in use, when adjacent screens are connected by said connector they lie in different planes.

## Patentansprüche

1. Siebboden zur Verwendung in einem Schlammschüttelsieb, wobei der Siebboden ein perforiertes Filtermaterial enthält und versehen ist mit einer Einrichtung, mit der er mit einem benachbarten Siebboden verbunden werden kann, wobei die Einrichtung wenigstens ein Buchsenelement (138) enthält, dadurch gekennzeichnet, daß das wenigstens eine Buchsenelement (138) aus dem perforierten Filtermaterial gebildet ist, um den Durchgang von Flüssigkeit zu erleichtern.

2. Siebboden nach Anspruch 1, wobei das wenigstens eine Buchsenelement (738) einen rechtwinkligen Querschnitt besitzt.

3. Siebboden nach Anspruch 1, wobei das wenigstens eine Buchsenelement (838) einen dreieckigen Querschnitt besitzt.

4. Siebboden nach Anspruch 1, wobei das wenigstens eine Buchsenelement (1038) einen dreieckstumpfförmigen Querschnitt besitzt.

5. Siebboden nach Anspruch 1, wobei das wenigstens eine Buchsenelement (938) einen glockenförmigen Querschnitt besitzt.

6. Siebboden nach irgendeinem vorangehenden Anspruch, dadurch gekennzeichnet, daß die Einrichtung wenigstens ein Steckelement (240) enthält.

7. Siebboden nach Anspruch 6, wobei das wenigstens eine Steckelement aus dem Filtermaterial gebildet ist.

8. Siebboden nach Anspruch 6, wobei das wenigstens eine Steckelement (240) massiv ist.

9. Siebboden nach Anspruch 6, wobei das wenigstens eine Steckelement hohl ist.

10. Siebboden nach Anspruch 6, 7, 8 oder 9, wobei das wenigstens eine Steckelement (140) konisch ist.

11. Siebboden nach irgendeinem der Ansprüche 6 bis 10, wobei das wenigstens eine Steckelement (140) am Siebboden dauerhaft befestigt ist.

12. Siebboden nach irgendeinem der Ansprüche 6 bis 11, dadurch gekennzeichnet, daß es rechtwinklig ist, eine Seite mit wenigstens einem Steckelement (240) versehen ist und die gegenüberliegende Seite mit wenigstens einem Buchsenelement (238) versehen ist.

13. Siebboden nach irgendeinem der Ansprüche 1 bis 12, gekennzeichnet durch abwechselnde Steck- und Buchsenelemente.

14. Siebboden nach irgendeinem vorangehenden Anspruch, dadurch gekennzeichnet, daß der Siebboden einen Rahmen enthält, an dem das Filtermaterial angebracht ist, und ein Teil der Einrichtung durch den Rahmen gebildet ist.

15. Schlammschüttelsieb (10), das mit wenigstens zwei Siebböden nach irgendeinem der vorangehenden Ansprüche versehen ist, die miteinander verbunden sind.

16. Schlammschüttelssieb nach Anspruch 15, dadurch gekennzeichnet, daß sich die Siebböden im wesentlichen auf gleicher Höhe befinden.

17. Schlammschüttelsieb nach Anspruch 15, dadurch gekennzeichnet, daß sich die Siebböden (420, 422) auf verschiedenen Höhen befinden.

18. Schlammschüttelsieb nach Anspruch 15, ferner mit einem Verbinder, der eine Basis (646), eine erste Gruppe Steckverbinder, die von der Basis in einer ersten Richtung vorstehen, und eine zweite Gruppe Steckverbinder, die von der Basis in einer zur ersten Richtung entgegengesetzten zweiten Richtung vorstehen, enthält.

19. Schlammschüttelsieb nach Anspruch 18, wobei die erste Gruppe Steckelemente des Verbinders in einer ersten Ebene liegen und die zweite Gruppe Steckelemente in einer zweiten Ebene liegen, so daß sie im Gebrauch dann, wenn benachbarte Siebböden durch den Verbinder verbunden sind, in verschiedenen Ebenen liegen.

## Revendications

1. Crible à utiliser dans un tamis vibrant, lequel comprend un matériau de filtre perforé et est pourvu de moyens pour permettre audit crible d'être connecté à un crible adjacent, dans lequel lesdits moyens comprennent au moins un élément femelle (138), caractérisé en ce que ledit (lesdits) élément(s) femelle(s) (138) est (sont) formé(s) par ledit matériau de filtre perforé pour faciliter le passage du liquide à travers lui (eux).

2. Crible selon la revendication 1, dans lequel ledit (lesdits) éléments(s) femelle(s) (738) présente (présentent) une section transversale rectangulaire.

3. Crible selon la revendication 1, dans lequel lesdit (lesdits) élément(s) femelle (838) présente (présentent) une section transversale triangulaire.

4. Crible selon la revendication 1, dans lequel ledit (lesdits) élément(s) femelle (1038) présente (présentent) une section transversale triangulaire tronquée.

5. Crible selon la revendication 1, dans lequel ledit (lesdits) élément(s) femelle (938) présente (présentent) une section transversale en forme de cloche.

6. Crible selon l'une quelconque des revendications précédentes, caractérisé en ce que lesdits moyens comprennent au moins un élément mâle (240).

7. Crible selon la revendication 6, dans lequel ledit (lesdits) élément(s) mâle(s) est (sont) formé(s) par ledit matériau de filtre.

8. Crible selon la revendication 6, dans lequel ledit (lesdits) élément(s) mâle(s) (240) est (sont) solide(s).

9. Crible selon la revendication 6, dans lequel ledit (lesdits) élément(s) mâle(s) est (sont) creux.

10. Crible selon la revendication 6, 7, 8 ou 9, dans lequel ledit (lesdits) élément(s) mâle(s) (140) est (sont) conique(s).

11. Crible selon l'une quelconque des revendications 6 à 10, dans lequel ledit (lesdits) élément(s) mâle(s) (140) est (sont) fixé(s) de façon permanente audit crible.

12. Crible selon l'une quelconque des revendications 6 à 11, caractérisé en ce qu'il est rectangulaire, en ce qu'un côté est pourvu d'au moins un élément mâle (240) et le côté opposé est pourvu d'au moins un élément femelle (238).

13. Crible selon l'une quelconque des revendications 1 à 12, caractérisé par des éléments alternés mâles et femelles.

14. Crible selon l'une quelconque des revendications précédentes, caractérisé en ce que ledit crible comprend un bâti sur lequel ledit matériau de filtre est monté et une partie desdits moyens est formée par ledit bâti.

15. Tamis vibrant (10) pourvu d'au moins deux cribles selon l'une quelconque des revendications précédentes connectés ensemble.

16. Tamis vibrant selon la revendication 15, caractérisé en ce que lesdits cribles se trouvent essentiellement au même niveau.

17. Tamis vibrant selon la revendication 15, caractérisé en ce que lesdits cribles (420, 422) se trouvent à des niveaux différents.

18. Tamis vibrant selon la revendication 15, incluant, de plus, un connecteur comprenant une base (646), un premier ensemble d'éléments mâles s'avançant à partir de ladite base dans une première direction et un second ensemble d'éléments mâles s'avançant à partir de ladite base dans une seconde direction opposée à ladite première direction.

19. Tamis vibrant selon la revendication 18, dans lequel ledit premier ensemble d'éléments mâles dudit connecteur repose dans un premier plan et ledit second ensemble d'éléments mâles repose dans un second plan de sorte que, en utilisation, lorsque des cribles adjacents sont connectés par ledit connecteur, ils reposent dans des des plans différents.
